Europäisches Patentamt

European Patent Office

Office européen des brevets

(19)

(11) Veröffentlichungsnummer: **0 180 717 B1**

(12) **EUROPÄISCHE PATENTSCHRIFT**

(45) Veröffentlichungstag der Patentschrift: 14.03.90

(21) Anmeldenummer: 85108801.3

(22) Anmeldetag: 13.07.85

(51) Int. Cl.⁵: **H 04 N 5/782,** G 11 B 15/14

(54) Anordnung zur Beseitigung der Kopfumschaltstörungen in Videorecordern.

(30) Priorität: 09.11.84 DE 3440969

(43) Veröffentlichungstag der Anmeldung:
14.05.86 Patentblatt 86/20

(45) Bekanntmachung des Hinweises auf die
Patenterteilung:
14.03.90 Patentblatt 90/11

(84) Benannte Vertragsstaaten:
DE FR GB IT

(56) Entgegenhaltungen:
DE-A-3 308 702
US-A-3 824 620

IEEE TRANSACTIONS ON CONSUMER
ELECTRONICS, Band CE-30, Nr. 4, November
1984, Seiten 592-596, New York, US;
WATATANI et al.: "The FM audio sigal recording
system for 8 mm Video"

(73) Patentinhaber: GRUNDIG E.M.V. Elektro-
Mechanische Versuchsanstalt Max Grundig
holländ. Stiftung & Co. KG.
Kurgartenstrasse 37
D-8510 Fürth/Bay. (DE)

(72) Erfinder: Opelt, Christian
Tannenstrasse 12
D-8501 Veitsbronn (DE)

**Beschreibung**

Die vorliegende Erfindung betrifft eine Anordnung zur Beseitigung der Kopfumschaltstörungen in Videorecordern, bei denen die Toninformation frequenzmoduliert mit rotierenden Köpfen in Schrägspuren eines Magnetbandes aufgezeichnet wird und die bei der Wiedergabe im demodulierten Tonsignal entstehenden Störungen durch ein Ersatzsignal ersetzt werden, wobei im korrigierten Signal keine Amplituden- und Phasensprünge auftreten, mit einem Hauptsignalweg, bestehend aus

einer Verzögerungsstufe, die das Eingangssignal mindestens um die Dauer der Störung verzögert,

einem Schalter mit vernachlässigbar kleinem Durchlaßwiderstand, der in den Zeitabschnitten, in denen die Störung auftritt, geöffnet ist,

und einem als Kondensator ausgebildeten Speicher zur Abspeicherung des am Ausgang des Schalters anliegenden Signalwertes, und einem zusätzlichen Signalweg zur Gewinnung des Ersatzsignals.

Es ist aus der Videotechnik bereits bekannt, die frequenzmodulierte Toninformation entweder ebenfalls mit den rotierenden Videoköpfen oder mit zusätzlichen rotierenden Tonköpfen zusammen mit der Videoinformation in den Schrägspuren eines Magnetbandes aufzuzeichnen. Bei der Wiedergabe der aufgezeichneten Toninformation tritt bei jeder Kopfumschaltung ein Störimpuls mit einer Dauer von etwa 8μsec auf, der sich in zeitlichen Abständen von 20 msec wiederholt. Diese Störimpulse bewirken eine hörbare Störung im widergegebenen Tonsignal.

Aus der DE—A—33 08 702 ist bereits ein Videorecorder nach dem System Video 2000 bekannt, bei dem bei der Aufzeichnung jeweils für die Dauer von 1,5 Zeilen (also etwa 100 μsec) auf Wiedergabe geschaltet wird, um ein in der Nachbarspur aufgezeichnetes Spursteuersignal zu lesen. Wird ein frequenzmodulierter Tonträger in den Schrägspuren des bekannten Magnetbandes aufgezeichnet, so entstehen bei der Wiedergabe des Tonsignals periodisch wiederkehrende Unterbrechungen. Diese Unterbrechungen werden beim bekannten Videorecorder durch eine Ersatzspannung aufgefüllt, die sich stetig vom Spannungswert unmittelbar vor der Unterbrechung bis zum Spannungswert unmittelbar nach der Unterbrechung ändert. Zur Erzeugung dieser Ersatzspannung verwendet die bekannte Schaltung einen Differenzverstärker zur Bildung einer Differnzspannung aus unverzögertem und verzögertem demodulierten Tonsignal, eine Abtasthalteschaltung und einen Spannungs/Strom-Konverter. Letzterer liefert während der Unterbrechung einen Konstanten Strom an den Kondensator einer im Hauptstromweg liegenden weiteren Abtasthalteschaltung, so daß der Kondensator der im Hauptstromweg liegenden weiteren Abtasthalteschaltung stetig vom Spannungswert unmittelbar vor der Unterbrechung bis zum Spannungswert unmittelbar nach der Unterbrechung umgeladen wird.

Die Aufgabe der vorliegenden Erfindung besteht darin, einen Weg zu zeigen, wie Schaltungsanordnungen der im Oberbegriff des Anspruchs 1 angegebenen Art mit geringem schaltungstechnischen Aufwand realisiert werden können, wobei als Ersatzsignal ein nicht zeitlineares Signal derart eingefügt werden soll, daß im korrigierten Signal nur minimale Phasen- und Amplitudensprüge auftreten.

Diese Aufgabe wird durch die im kennzeichnenden Teil des Anspruchs 1 angegebenen Merkmale gelöst. Vorteilhafte Weiterbildungen der Erfindung ergeben sich aus dem Anspruch 2.

Die Vorteile der Erfindung liegen insbesondere darin, daß im wiedergegebenen Tonsignal keinerlei hörbare Störungen auftreten.

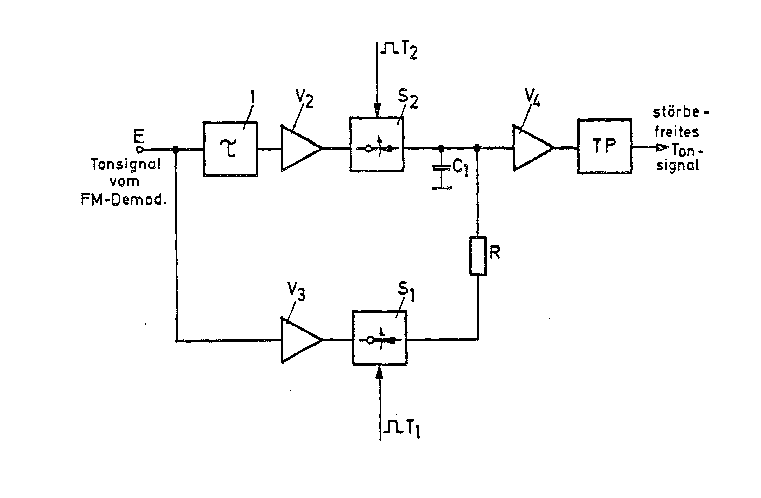

Weitere vorteilhafte Eigenschaften der Erfindung ergeben sich aus einem Ausführungsbeispiel, das im folgenden anhand der Figur erläutert wird.

Dem Eingang E der Anordnung wird das demodulierte, störbehaftete Tonsignal zugeführt, Dieses gelangt einerseits über eine Verzögerungsstufe 1, deren Verzögerungszeit bei einer Tonsignalbandbreite von 20 kHz maximal 10 μsec beträgt, an einen Verstärker $V_2$ mit niederohmigem Ausgang und andererseits über einen Verstärker $V_3$ an einen Schalter $S_1$.

An den Ausgang des Verstärkers $V_2$ ist ein Kontakt eines Schalters $S_2$ mit vernachlässigbar kleinem Durchlaßwiderstand angeschlossen, dessen anderer Kontakt mit dem massefernen Anschluß eines Kondensators $C_1$, dem (hochohmigen) Eingang eines Verstärkers $V_4$ und über einen Widerstand R und einen Schalter $S_1$ mit dem (niederohmigen) Ausgang des Verstärkers $V_3$ verbunden ist. Das Ausgangssignal des Verstärkers $V_4$ gelangt über ein Tiefpaßfilter mit einer Grenzfrequenz von 20 kHz an den Ausgang der Anordnung.

Die beschriebene Anordnung funktioniert wie folgt:

Das am Eingang E der Anordnung anliegende Tonsignal wird in der Verzögerungsstufe 1 um 10μsec verzögert. Das verzögerte Tonsignal gelangt — wenn keine Störungen im Signal auftreten — über den Verstärker $V_2$ und den geschlossenen Schalter $S_2$ an einen Speicherkondensator $C_1$ und von dort über den Verstärker $V_4$ und das Tiefpaßfilter TP mit einer Grenzfrequenz von 20 kHz, das unerwünschte Frequenzanteile (beispielsweise durch die im folgenden beschriebenen Schaltvorgänge verursacht) an den Ausgang der Anordnung.

Der Schalter $S_1$ ist — wenn keine Störungen im Signal auftreten — ebenfalls geschlossen. Der durch den Widerstand R fließende Strom beeinflußt die Spannung am Kondensator jedoch nicht, da der Ausgangswiderstand des Verstärkers $V_2$ und der Durchlaßwiderstand des Schalters $S_2$ vernachlässigbar klein sind.

Bei Vorhandensein eines Störimpulses wird der Schalter $S_1$ durch einen Schaltimpuls $T_1$ für die Dauer von 10 µsec geöffnet, damit die Störung nicht über den zusätzlichen Signalweg an den Speicher $C_1$ gelangen kann. Der Schaltimpuls $T_1$ kann — da bekannt ist, daß die Störungen bei der Kopfumschaltung auftreten — aus den Kopfumschaltimpulsen abgeleitet werden. Er kann aber ebenso einem (nicht gezeichneten) mit dem Eingang der Anordnung verbundenen Störsignaldetektor entnommen werden.

Nach 10 µsec, also nach dem Ende der Störung, wird der Schalter $S_1$ wieder geschlossen und gleichzeitig der Schalter $S_2$ durch den Schaltimpuls $T_2$ für die Dauer von 10 µsec geöffnet. Nach dem Öffnen des Schalters $S_2$ liegt am Kondensator $C_1$ der Wert der Spannung bzw. des Tonsignals unmittelbar vor dem Störimpuls an. Im folgenden findet über den Verstärker $V_3$, den geschlossenen Schalter $S_1$ und den Widerstand R eine Umladung des Kondensators $C_1$ statt, d.h. eine "voreilende" Signalspannung wird in die Unterbrechung bzw. Lücke des verzögerten Eingangssignals im Sinne einer Beseitigung der Kopfumschaltstörung eingefügt. Die Werte von Widerstand R und Kondensator $C_1$ müssen so gewählt werden, daß die durch das Produkt R.$C_1$ gebildete Umladezeitkonstante 10 µsec beträgt. Nach 10 µsec, d.h. am Ende der Störung, ist der Kondensator $C_1$ genau auf den Spannungswert des Eingangssignals am Ende der Störung umgeladen, so daß durch ein Schließen des Schalters $S_2$ der Hauptsignalweg wieder geschlossen werden kann, ohne daß Amplituden- und Phasensprünge im wiedergegebenen Tonsignal entstehen.

In der Praxis wird die beschriebene Schaltung vorteilhafterweise zwischen den FM-Demodulator und das ohnehin vorhandene Ausgangs-Teifpaßfilter TP eingefügt.

## Patentansprüche

1. Anordnung zur Beseitigung der Kopfumschaltstörungen in Videorecordern, bei denen die Toninformation frequenzmoduliert mit rotierenden Köpfen in Schrägspuren eines Magnetbandes aufgezeichnet wird und die bei der Wiedergabe im demodulierten Tonsignal entstehenden Störungen durch ein Ersatzsignal ersetzt werden, wobei im korrigierten Signal keine Amplituden- und Phasensprünge auftreten, mit einem Hauptsignalweg, bestehend aus

einer Verzögerungsstufe (1), die das Eingangssignal mindestens um die Dauer der Störung verzö-gert,

einem Schalter ($S_2$) mit vernachlässigbar klei-nem Durchlaßwiderstand, der in den Zeitabschnitten, in denen die Störung auftritt, geöffnet ist,

und einem als Kondensator ausgebildeten Spei-cher ($C_1$) zur Abspeicherung des am Ausgang des Schalters ($S_2$) anliegenden Signalwertes, und mit einem zusätzlichen Signalweg zur Gewinnung des Ersatzsignals dadurch gekennzeichnet, daß der zusätzliche Signalweg einen Widerstand (R) enthält, über den in den Zeitabschnitten, in denen die Störung auftritt, ine Umladung des Speichers ($C_1$) durch die nicht verzögerte Signalspannung erfolgt, und daß die durch den Widerstand (R) un den Speicher ($C_1$) gebildete Umladezeitkonstante gleiche der Verzögerungszeit der Verzögerungsstufe (1) ist.

2. Annordung nach Anspruch 1, dadurch gekennzeichnet, daß

im Hauptsignalweg zwischen die Verzögerungsstufe (1) und den Schalter ($S_2$) eine Verstärker ($V_2$) mikt niederohmigem Ausgang,

zwischen der Speicher ($C_1$) und den Ausgang der Anordnung ein Verstärker ($V_4$) mit hochohmigem Eingang

und im Nebensignalweg zwischen den Eingang der Anordnung und den Widerstand (R) ein wieterer Verstärker ($V_3$) mit niederohmigem Ausgang geschaltet ist.

## Revendications

1. Dispositif pour éliminer les perturbations de commutation entre les têtes dans des enregistreurs vidéo, dans lesquels l'information relative au son est enregistrée, en étant modulée en fréquence, par des têtes rotatives, sur des pistes obliques d'une bande magnétique et les perturbations apparaissant lors de la lecture dans le signal son démodulé sont replacées par un signal de remplacement, aucun saut d'amplitude et de phase n-apparaissant dans le signal corrigé, et comportant un voie principale de transmission des signaux, constituée par

un étage de retardement (1), qui retarde le signal d'entrée d'une durée égale à au moins la durée de la perturbation,

un interrupteur ($S_2$) qui possède une résistance de passage faible au point d'être négligeable et est ouvert pendant les intervalles de temps, pendant lesquels la perturbation apparaît, et

une mémoire ($C_1$) réalisée sous la forme d'un condensateur et servant à mémoriser la valeur du signal présente à la sortie de l'interrupteur ($S_2$), et comportant une voie additionnelle de transmission de signaux, pour la récupération du signal de remplacement, caractérisé en ce que la voie additionnelle de transmission de signaux contient une résistance (R), par l'intermédiaire de laquelle une décharge du condensateur ($C_1$) est exécutée par la tension de signal non retardée, pendant les intervalles de temps, pendant lesquels la perturbation apparaît, et que la constante de temps de décharge, formée par la résistance (R) et la mémoire ($C_1$), est égale au temps de retard de l'étage de retardement (1).

2. Dispositif selon la revendication 1, caractérisé en ce que

un amplificateur ($V_2$) possédant une sortie de faible valeur ohmique est branché dans la voie principale de transmission des signaux entre l'étage de retardement (1) et l'interrupteur ($S_2$),

un amplificateur ($V_4$) possédant une entrée de forte valeur ohmique est branché entere la mémoire ($C_1$) et la sortie du dispositif, et

un autre amplificateur ($V_3$) possédant une sortie

de faible valeur ohmique est branché dans la voie auxiliaire de tranmission de signaux entre l'entrée du dispositif et la résistance (R).

## Claims

1. Arrangement for the elimination of head switching disturbances in video recorders, in which the sound information is recorded frequency-modulated with rotating heads in helical tracks of a magnetic tape and the disturbances occurring in the demodulated sound signal during playback are replaced by a substitute signal, no sudden amplitude and phase changes occurring in the corrected signal, with a main signal path, consisting of
— a delay stage (1), which delays the input signal at least by the duration of the disturbance,
— a switch ($S_2$) with negligible forward resistance, which is open in the time intervals in which the disturbance occurs,
— and a memory ($C_1$), designed as a capacitor, for storage of the signal value at the output of the switch ($S_2$), and with an additional signal path for obtainment of the substitute signal, characterized in that the additional signal path contains a resistor (R), via which a charge reversal of the memory ($C_1$) is performed by the undelayed signal voltage in the time intervals in which the disturbance occurs, and in that the charge reversal time constant formed by the resistor (R) and the memory ($C_1$) is equal to the delay time of the delay stage (1).

2. Arrangement according to claim 1, characterized in that
— an amplifier ($V_2$) with low-resistance output is connected in the main signal path between the delay stage (1) and the switch ($S_2$),
— an amplifier ($V_4$) with high-resistance input is connected between the memory ($C_1$) and the output of the arrangement
— and a further amplifier ($V_3$) with low-resistance output is connected in the auxiliary signal path between the input of the arrangement and the resistor (R).